# EUROPEAN PATENT SPECIFICATION

(11) **EP 0 644 408 B1**
(45) Date of publication and mention of the grant of the patent: **22.07.1998**
(21) Application number: 94301275.7
(22) Date of filing: 23.02.1994
(51) Int. Cl.: G01J 5/08

(54) **Method and apparatus for measuring temperature using infrared techniques**
Verfahren und Vorrichtung zur Temperaturmessung mittels Infrarottechnik
Méthode et appareil pour mesurer la température en utilisant des techniques infrarouges

(30) Priority: 17.09.1993 US 121916
(43) Date of publication of application: 22.03.1995
(73) Proprietor: OMEGA ENGINEERING, INC., Stamford, CT 06907 (US)
(72) Inventor: Hollander, Milton B., Dr., Stamford, Connecticut 06903 (US); McKinley, W. Earl, Stamford, Connecticut 06907 (US)
(74) Representative: Warren, Anthony Robert

(56) References cited:
- EP-A- 0 458 200
- DE-A- 3 213 955
- DE-A- 3 607 679
- JP-A- 5 722 521
- US-A- 3 823 313
- US-A- 4 315 150
- US-A- 4 330 212
- US-A- 4 494 881
- US-A- 4 576 432
- US-A- 4 626 686
- US-A- 4 963 096
- US-A- 5 085 525

## Description

The present invention relates generally to a method and apparatus for accurately measuring the temperature of a surface using infrared measurement techniques and, more particularly, to such a method and apparatus which utilizes a laser sighting device to target the energy zone on a surface from which the temperature is to be measured.

Remote infrared temperature measuring devices (commonly referred to as infrared pyrometers or radiometers) have been used for many years to measure the temperature of a surface from a remote location. Their principle of operation is well known. All surfaces at a temperature above absolute zero emit heat in the form of radiated energy. This radiated energy is created by molecular motion which produces electromagnetic waves. Thus, some of the energy in the material is radiated in straight lines away from the surface of the material. Many infrared radiometers use optical reflection and/or refraction principles to capture the radiated energy from a given surface. The infrared radiation is focused upon a detector, analyzed and, using well known techniques, the surface energy is collected, processed and the temperature is calculated and displayed on an appropriate display.

Examples of such infrared radiometers are illustrated at pages J-1 through J-42 of The Omega Engineering Handbook, Volume 2B. See, also, U.S. Patent No. 4,417,822 which issued to Alexander Stein et al. on November 29, 1983 for a Laser Radiometer; U.S. Patent No. 4,527,896 which issued to Keikhosrow Irani et al. on July 9, 1985 for an Infrared Transducer-Transmitter for Non-Contact Temperature Measurement; and U.S. Patent No. 5,169,235 which issued to Hitoshi Tominaga et al. for Radiation Type Thermometer on December 8, 1992. Also see Baker, Ryder and Baker, Volume II, Temperature Measurement in Engineering, Omega Press, 1975, Chapters 4 and 5.

When using such radiometers to measure surface temperature, the instrument is aimed at a target or "spot" within the energy zone on the surface on which the measurement is to be taken. The radiometer receives the emitted radiation through the optical system, and it is focussed upon an infrared sensitive detector which generates a signal which is internally processed and converted into a temperature reading which is displayed.

The precise location of the energy zone on the surface as well as its size are extremely important to insure accuracy and reliability of the resultant measurement. It will be readily appreciated that the field of view of the optical systems of such radiometers is such that the diameter of the energy zone increases directly with the distance to the target. The typical energy zone of such radiometers is defined as where 90% of the energy focused upon the detector is found. Heretofore, the size of the actual energy zone has usually been determined approximately by the use of a "distance to target table" or by actual physical measurement.

The actual size and shape of the energy zone is determined by the optics of the radiometer and the distance between the radiometer and the target. Each radiometer has a defined angle of vision or "field of view" which is typically identified in the instrument's specification sheet. The size of the energy zone is predetermined when the field of view is known in conjunction with the distance to the target. Obviously, the further the radiometer is held from the target (i.e., the greater the distance), the larger the energy zone.

Target size and distance are critical to the accuracy of most infrared thermometers. Every infrared instrument has a field of view (FOV), an angle of vision in which it will average all the temperatures which it sees. Field of view is described either by its angle or by a distance-to-size ratio (D:S). If the D:S = 20:1, and if the distance to the object divided by the diameter of the object is exactly 20, then the object exactly fills the instrument's field of view. A D:S ratio of 60:1 equals a field of view of 1 degree.

Since most IR thermometers have fixed-focus optics, the minimum measurement spot occurs at the specified focal distance. Typically, if an instrument has fixed-focus optics with a 120:1 D:S ratio and a focal length of 150 cm (60"), the minimum spot (resolution) the instrument can achieve is 60 divided by 120, or 1.3 cm (.5") at a distance of 150 cm (60") from the instrument. This is significant when the size of the object is close to the minimum spot the instrument can measure.

Most general-purpose IR thermometers use a focal distance of between 50 and 150 cm (20" and 60"); special close-focus instruments use a 1.3 to 30.5 cm (.5" to 12") focal distance. See page Z54 and Z55, Volume 28, of The Omega Engineering Handbook, Vol. 28.

This can be expressed in a "distance-to-spot size ratio." For example, with a "distance-to-spot size ratio" of 40:1, the periphery of the energy zone would have 2.54 cm (1") diameter at a distance of 101.6 cm (40") or, at a distance of 50.1 cm (20"), the diameter of the energy zone would be 1.27 cm (1/2"). The manufacturer of the radiometer or pyrometer usually provides field of view diagrams for determining the energy zone at specific distances.

In order to render such devices more accurate, laser beam sighting devices have been used to target the precise center of the energy zone. See, for example, Pages C1-10 through C1-12 of The Omega Temperature Handbook, Vol. 27, US-A-4,315,150 and DE-A-3,213,955. Various sighting devices such as scopes with cross hairs have also been used more accurately to identify the center of the energy zone to be measured. See, for example, Pages C1-10 thorough C1-21 of The Omega Temperature Handbook, Vol. 27.

US-A-5,085,525 discloses a scanning radiation detector provided with a sighting device having a movable laser light beam which illuminates and thereby marks the scan line (or spots on the scan line) from where measurements are being taken.

The use of a laser to pinpoint the center of the energy zone does not, however, provide the user with an accurate definition of the actual energy zone from which the measurement is being taken. This inability frequently results in inaccurate readings. For example, in cases where the area from which radiation is emitted is smaller than the target diameter limitation (too far from, or too small, a target), inaccurate readings will occur.

One method used to determined the distance to the target is to employ an infrared detector or a Doppler effect distance detector, or a split image detector similar to that used in photography. The latter technique is used in US-A-4,315,150 and DE-A-3,213,955, in which the beam from a single laser tube is split into two mutually converging beams. In DE-A-3,213,955, two converging beams are caused to intersect, thereby to mark the position of the smallest measurement spot. In US-A-4,31 5,150, one of the converging beams is used to indicate the center spot or target, and the other forms a circle around the center spot. This facilitates positioning and allows the user to see the target. However, the exact size of the energy zone must still be known if one is to have any degree of certainty as to the actual area of the surface being measured. This is particularly true if the energy zone is too small or the surface which the energy zone encompasses is irregular in shape. In the case where the surface does not fill the entire energy zone area, the readings will be low and, thus, in error.

Similarly, if the surface is irregularly shaped, the readings will also be in error since part of the object would be missing from the actual energy zone being measured. Thus, the use of a single laser beam to pinpoint the apparent center of the energy zone does not insure complete accuracy, since the user of the radiometer does not know specifically the boundaries of the energy zone being measured.

As will be appreciated, none of the foregoing prior art recognizes this inherent problem, let alone offers a solution to the problems created thereby.

US-A-4,494,881 proposes a solution to the problem which involves using an incandescent lamp or strobe lamp to provide a visible light beam which is congruent with the field of view of the infrared detector, and illuminates the area of the surface corresponding to the energy zone being measured. JP-A-57-22521 proposes a solution in which multiple incandescent lamps are disposed around the field of view of the infrared detector, which produce a corresponding plurality of visible light beams which are substantially parallel to the external edge of the invisible beam of infrared radiation corresponding to the field of view of the infrared detector, so as approximately to outline the area of the surface corresponding to the energy zone being measured. However, both of these proposals possess the disadvantage that the visible light beams from the incandescent lamps, which impinge upon the surface in or near the energy zone add energy to the zone which is sensed by the infrared detector, thus leading to inaccuracies in the temperature measurements.

Against the foregoing background, it is a primary object of the present invention to provide a method and apparatus for measuring the temperature of a surface using infrared techniques, which provides more accurate measurement of the surface temperature than by the use of techniques heretofore employed.

It is yet another object of the present invention to provide such a method and apparatus which permits the user visually to identify the energy zone on the surface to be measured, such method and apparatus employing laser beams for clearly outlining the periphery of the energy zone on the surface.

The present invention is directed to a method and apparatus for visibly outlining an energy zone to the measured by a radiometer, generally of the type disclosed in JP-A-57-22521 and as defined in the precharacterising clauses of claims 1 and 4 respectively.

According to the present invention, there is provided a method and apparatus for visibly outlining the energy zone as defined in the characterising clauses of claims 1 and 4 respectively.

More than two stationary secondary beams are directed to predetermined points around the periphery of the energy zone to define the energy zone. The more than two secondary laser beams are derived from a single primary laser beam by means of beam splitters. This can be accomplished by mirrors, optics and fiber optics.

Reference will now be made to the accompanying drawings, wherein:
Fig. 1 is a schematic illustration of the prior art type of radiometers using laser sighting devices;
Fig. 2 is a schematic illustration of one embodiment of the present invention in which a single primary beam is split into a number of individual secondary laser beams which are projected so as to define the energy zone being measured;
Figs. 3A-3C illustrate alternative configurations of the light patterns which can be projected using the apparatus embodying the present invention; and
Fig. 4 is a schematic illustration of another embodiment of the invention wherein the single primary laser beam is divided into a plurality of secondary laser beams defining the energy zone, by the use of optical fibers.

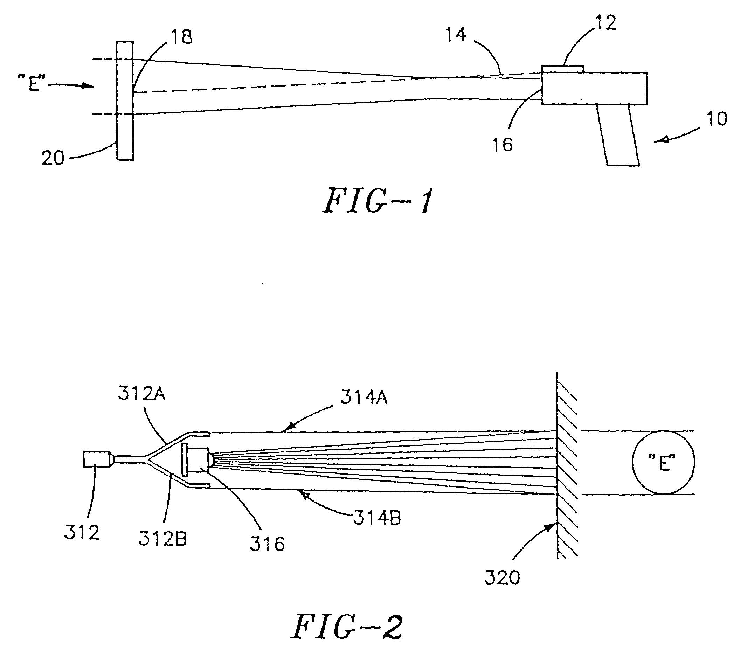

Traditionally, prior art radiometers have long employed laser sighting devices to assist in the proper aim and alignment of the instrument. Fig. 1 illustrates the operation of traditional, prior art, hand held radiometers. Such a radiometer, referred to generally by reference numeral 10, includes a laser beam sighting or aiming device or sight scope 12 which emits a laser beam 14 to a spot or target 18 on the surface 20 whose temperature is to be measured. This spot 18 is located in the center of the energy zone "E" which is to be measured by the radiometer 10. This radiometer 10 includes a detector 16 which is connected to conventional internal circuitry and display means (not shown) for conversion, calculation and display of the temperature of the surface 20 calculated indirectly from the energy radiated from the surface within the energy zone E. Such energy is radiated in straight lines away from the surface 20 and captured with the detector 16 of the radiometer 10. Using infrared radiation principles, the radiometer is thus able to capture and measure the infrared energy in the energy zone E and determine the surface temperature thereof.

As can readily be appreciated, however, such laser aiming devices are merely able to identify the center of the energy zone being measured and not the outer periphery of the actual energy zone from which the measurement is being taken. The farther away from the surface the radiometer 10 is positioned, the larger is the energy zone E. Thus, depending upon the size and configuration of the surface 20, the actual energy zone E may, conceivably, include irregular shaped portions of the surface 20, or even extend beyond the edges of the surface. Of course, in such instances, the resultant measured temperature would be inaccurate. Without knowing the outer perimeter of such energy zone E, the user of the radiometer 10 would have no knowledge of such fact or that the resultant readings could be inaccurate.

The present invention provides a means for visibly defining the energy zone E so that the user of the radiometer 10 can observe the actual energy zone being measured to determine where it falls relative to the surface being measured. In the various embodiments of this invention, secondary laser beams comprising fine laser lines are projected against the surface being measured and such lines are positioned so as to encompass the periphery of the energy zone E.

The periphery of the energy zone E is identified as a function of the stated "field of view" of the particular radiometer as identified in its specifications and the distance between the radiometer and the target. Identification of the size and shape of the energy zone is easily done using conventional mathematical formulas. Once identified, the laser beams are then projected about the periphery of the energy zone E in accordance with the method and apparatus hereinafter described. One simple "aiming" approach is to project the laser beams at the same angle as the field of view of the radiometer along the same axis or, alternatively, by mechanically adjusting the laser beam angle in accordance with the "distance to spot size ratio" calculations. In either event, the periphery of the energy zone E would be identified by the laser beams.

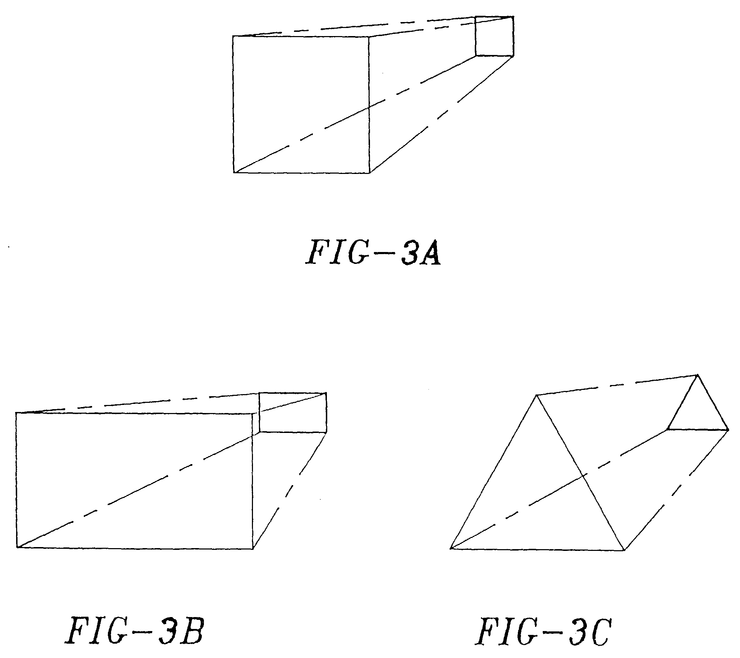

Fig. 2 illustrates an embodiment of the present invention in which a laser 312 has splitting components 312A and 312B which produce, from a single primary laser beam, more than two individual secondary laser beams about the detector 316. Two of these individual secondary beams are shown in Fig. 2, identified as 314A and 314B. These individual secondary beams 314A and 314B are directed to the surface 320 being measured at the perimeter of the energy zone E rather than at its center. Through the use of a number of such secondary laser beams, the energy zone E becomes clearly identified rather than merely the center of the energy zone E. A single laser 312 is used, and laser splitting devices or components 312A, 312B are used to split the single primary laser beam into the individual secondary laser beams 314A, 314B.

It will, of course, be appreciated that the energy zone E may assume configurations other than the circular configuration shown in Fig. 2. Figs. 3A-C illustrate alternative square (Fig. 3A), rectangular (Fig. 3B) and triangular (Fig. 3C) configurations for the light patterns which may be accomplished using the means embodying the present invention.

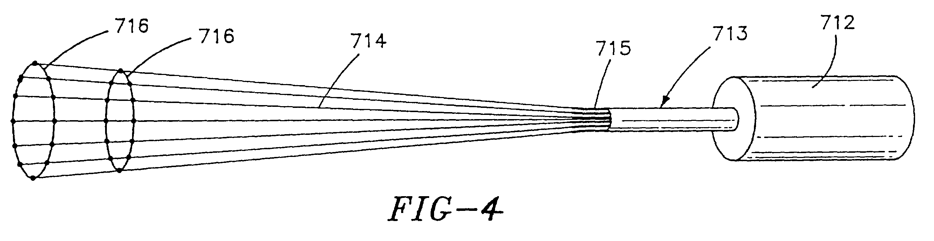

Fig. 4 illustrates another method for defining the energy zone where a circular configuration can be accomplished without rotation of the laser beam, wherein a plurality of fixed optical fibers, positioned to project a number of spots, is employed. In this Figure, a fixed laser 712 projects a primary beam 713 which is split into a plurality of secondary beams 714 by a bundle of optical fibers 715 in order to project a pattern 716 onto the surface defining the energy zone E. Additional configurations may also be used, if desired.

Having thus described the invention with particular reference to the preferred forms thereof, it will be obvious that various changes and modifications can be made therein without departing from the scope of the present invention as defined by the appended claims.

## Claims

1. A method for visibly outlining an energy zone to be measured by a radiometer, said method comprising the steps of providing said radiometer with a sighting device adapted to project a plurality of stationary light beams against a surface whose temperature is to be measured and adapted to outline said energy zone visibly;
characterised in that said sighting device is a laser sighting device including a primary laser beam generator (312;712) and a laser beam splitting device (312A, 312B; 715), and in that said method includes:
(a) generating a primary laser beam to strike said splitting device;
(b) dividing said primary laser beam, by means of said splitting device, into more than two secondary laser beams (314A, 314B; 714) and
(c) projecting said more than two secondary laser beams from said splitting device, said more than two secondary beams being directed to strike said surface (320) at separate positions about the periphery of said zone so as to project a corresponding number of visible light spots (716) upon said surface (320) at the periphery of said zone, positioned so as to encompass and configure, and so visibly outline, said zone.

2. A method according to claim 1, which includes splitting said primary laser beam (713) into said more than two secondary laser beams (714) by projecting said primary beam through a splitting device comprising a plurality of fiber optic elements (715).

3. The method according to claim 1 or 2, wherein said more than two secondary laser beams (314A, 314B; 714) are positioned by said splitting device (312A, 312B; 715) so as to outline said energy zone.

4. Apparatus for use in conjunction with a radiometer for visibly outlining an energy zone to be measured by said radiometer, said apparatus comprising a sighting device adapted to emit a plurality of stationary light beams against a surface whose temperature is to be measured and means to position said light beams about the energy zone to outline said energy zone visibly; characterised in that said sighting device comprises:
(a) a laser generator (312; 712) operable to generate a primary laser beam;
(b) means comprising a laser beam splitting device (312A, 312B; 715) operable to divide said primary laser beam into more than two secondary laser beams (314A, 314B; 714), and to project said more than two secondary beams to strike said surface (320) at separate positions about the periphery of said zone, so as to position a corresponding number of visible light spots (716) upon said surface (320) at the periphery of said zone, to encompass and configure, and so visibly outline, said zone.

5. Apparatus according to claim 4, wherein said splitting device comprises a bundle of fiber optic elements (715).

## Patentansprüche

1. Verfahren zum sichtbaren Darstellen einer von einem Radiometer zu messenden Energiezone, wobei das Verfahren den Schritt aufweist, das Radiometer mit einer Visiereinrichtung zu versehen, die dazu ausgelegt ist, eine Vielzahl von stationären Lichtstrahlen gegen eine Oberfläche zu projizieren, deren Temperatur zu messen ist, und dazu ausgelegt ist, die Energiezone sichtbar darzustellen;
dadurch gekennzeichnet, daß die Visiereinrichtung eine Laser-Visiereinrichtung mit einem primären Laserstrahlgenerator (312; 712) und einer Laser-Strahlteilereinrichtung (312A, 312B; 715) ist, und daß das Verfahren die Schritte aufweist:
(a) Erzeugen eines primären Laserstrahls, so daß dieser auf die Teilereinrichtung auftrifft;
(b) Teilen des primären Laserstrahls mittels der Teilereinrichtung in mehr als zwei sekundäre Laserstrahlen (314A, 314B; 714) und
(c) Projizieren der mehr als zwei sekundären Laserstrahlen von der Teilereinrichtung, wobei die mehr als zwei sekundären Strahlen so gerichtet werden, daß sie auf die Oberfläche (320) in voneinander getrennten Positionen um die Peripherie der Zone herum auftreffen, um so eine entsprechende Anzahl von sichtbaren Lichtpunkten (716) auf die Oberfläche (320) am Umfang der Zone zu projizieren, die so positioniert sind, daß sie die Zone einschließen und konfigurieren und folglich sichtbar darstellen.

2. Verfahren nach Anspruch 1, das den Schritt aufweist, den primären Laserstrahl (713) in die mehr als zwei sekundären Laserstrahlen (714) zu teilen, indem der primäre Strahl durch eine Teilereinrichtung projiziert wird, die eine Vielzahl von faseroptischen Elementen (715) aufweist.

3. Verfahren nach Anspruch 1 oder 2, wobei die mehr als zwei sekundären Laserstrahlen (314A, 314B; 714) durch die Teilereinrichtung (312A, 312B; 715) so positioniert werden, daß sie die Energiezone darstellen.

4. Vorrichtung zur Verwendung in Verbindung mit einem Radiometer zur sichtbaren Darstellung einer von dem Radiometer zu messenden Energiezone, wobei die Vorrichtung eine Visiereinrichtung aufweist, die dazu ausgelegt ist, eine Vielzahl von stationären Lichtstrahlen gegen eine Oberfläche zu emittieren, deren Temperatur zu messen ist, und Mittel aufweist, um die Lichtstrahlen um die Energiezone herum zu positionieren, um die Energiezone sichtbar darzustellen;
dadurch gekennzeichnet, daß die Visiereinrichtung aufweist:
(a) einen Lasergenerator (312; 712), der betriebsbereit ist, um einen primären Laserstrahl zu erzeugen;
(b) Mittel mit einer Laser-Strahlteilereinrichtung (312A, 312B; 715), die betriebsbereit ist, um den primären Laserstrahl in mehr als zwei sekundäre Laserstrahlen (314A, 314B; 714) zu teilen, und die mehr als zwei sekundären Strahlen so zu projizieren, daß diese in voneinander getrennten Positionen um die Peripherie der Zone herum auf die Oberfläche (320) auftreffen, um dergestalt eine entsprechende Anzahl von sichtbaren Lichtpunkten (716) am Umfang der Zone auf der Oberfläche (320) zu positionieren, um so die Zone einzuschließen und zu konfigurieren und folglich sichtbar darzustellen.

5. Vorrichtung nach Anspruch 4, wobei die Teilereinrichtung ein Bündel faseroptischer Elemente (715) aufweist.

## Revendications

1. Procédé pour délimiter de manière visible une zone d'énergie à mesurer à l'aide d'un radiomètre, ledit procédé comprenant l'étape d'équiper ledit radiomètre d'un dispositif de mire apte à projeter une pluralité de faisceaux lumineux fixes sur une surface dont la température doit être mesurée, et apte à délimiter de manière visible cette zone d'énergie,
caractérisé en ce que ledit dispositif de mire est un dispositif à laser comprenant un générateur de faisceaux laser primaires (312, 712), et un dispositif de division des faisceaux laser (312A, 312B, 715), et en ce que ledit procédé comprend :
(a) la génération d'un faisceau laser primaire rencontrant le dispositif de division ;
(b) la division dudit faisceau laser primaire en plus de deux faisceaux laser secondaires (314A, 314B, 714), au moyen du dispositif de division ; et
(c) la projection de ces plus de deux faisceaux laser secondaires à partir du dispositif de division, ces plus de deux faisceaux secondaires étant orientés pour rencontrer la surface (320) en des positions distinctes autour de la périphérie de ladite zone pour projeter un nombre correspondant de points lumineux visibles (716) sur ladite surface (320), à la périphérie de cette zone, ces points étant positionnés pour entourer et configurer, et ainsi délimiter de manière visible ladite zone.

2. Procédé selon la revendication 1;
comprenant la division du faisceau laser primaire (712) en plus de deux faisceaux laser secondaires (714), en projetant ledit faisceau laser primaire à travers un dispositif de division comprenant une pluralité d'éléments de fibres optiques (715).

3. Procédé selon la revendication 1 ou 2,
dans lequel les plus de deux faisceaux laser (314A, 314B, 714) sont positionnés par le dispositif de division (312A, 312B, 715) pour délimiter la zone d'énergie.

4. Appareil à utiliser avec un radiomètre pour délimiter de manière visible une zone d'énergie à mesurer par ledit radiomètre, ledit appareil comprenant un dispositif de mire apte à émettre une pluralité de faisceaux lumineux fixes sur une surface dont la température doit être mesurée, et des moyens pour positionner lesdits faisceaux lumineux autour d'une zone d'énergie pour délimiter cette zone d'énergie de manière visible,
caractérisé en ce que ledit dispositif de mire comprend :
(a) un générateur laser (312, 712) apte à engendrer un faisceau laser primaire,
(b) des moyens comprenant un dispositif de division du faisceau laser (312A, 312B, 715) apte à diviser le faisceau laser primaire en plus de deux faisceaux laser secondaires (314A, 314B, 714), et à projeter ces plus de deux faisceaux secondaires pour qu'ils rencontrent la surface (320) en des positions distinctes autour de la périphérie de cette zone en vue de positionner un nombre correspondant de points lumineux visibles (716) sur ladite surface (320), à la périphérie de ladite zone, pour entourer et configurer, et ainsi délimiter ladite zone de manière visible.

5. Appareil selon la revendication 4,
dans lequel le dispositif de division comprend un faisceau d'éléments (715) de fibres optiques.
